# EUROPEAN PATENT APPLICATION

(11) **EP 3 349 389 A1**
(43) Date of publication of application: **18.07.2018**
(21) Application number: 18159446.6
(22) Date of filing: 17.02.2016
(51) Int. Cl.: H04L 5/00, H04W 52/36

(54) **POWER HEADROOM REPORT MEDIA ACCESS CONTROL CONTROL ELEMENT, PHR MAC CE**

(30) Priority: 08.04.2015 US 201562144782 P; 18.12.2015 US 201514974883
(62) Divisional of application: 16706732.1
(71) Applicant: Intel IP Corporation, Santa Clara, CA 95054 (US)
(72) Inventor: He, Hong, Beijing 100190 (CN); Heo, Youn Hyoung, Santa Clara, CA 95054 (US); Burbidge, Richard C., Shrivenham Oxfordshire SN6 8HR (GB)
(74) Representative: Goddar, Heinz J.

(57) **Abstract**

Systems and methods provide component carrier management in carrier aggregation systems. A medium access control (MAC) protocol data unit (PDU) includes an activation/deactivation MAC subheader and an activation/deactivation MAC control element (CE) and a power headroom report, PHR, MAC control element. A plurality of configured carriers are categorized into at least one cell group. Configured secondary cells (SCells) are activated/deactivated according to the activation/deactivation MAC subheader and the activation/deactivation MAC CE. The extended PHR MAC CE includes one or more octets comprising C-fields, and a variable number of octets comprising respective power headroom values for SCells indicated as active by the C-fileds.

## Description

### Related Applications

This application is a non-provisional of U.S. Provisional Patent Application No. 62/144,782, filed April 8, 2015, which is hereby incorporated by reference herein in its entirety.

### Technical Field

The present disclosure relates to wireless communication systems, and more particularly relates to wireless communication systems that use carrier aggregation.

### Background Information

Wireless mobile communication technology uses various standards and protocols to transmit data between a base station and a wireless communication device. Wireless wide area network (WWAN) communication system standards and protocols can include, for example, the 3rd Generation Partnership Project (3GPP) long term evolution (LTE), and the Institute of Electrical and Electronics Engineers (IEEE) 802.16 standard, which is commonly known to industry groups as worldwide interoperability for microwave access (WiMAX). Wireless local area network (WLAN) can include, for example, the IEEE 802.11 standard, which is commonly known to industry groups as Wi-Fi. Other WWAN and WLAN standards and protocols are also known.

In 3GPP radio access networks (RANs) in LTE systems, a base station may include Evolved Universal Terrestrial Radio Access Network (E-UTRAN) Node Bs (also commonly denoted as evolved Node Bs, enhanced Node Bs, eNodeBs, or eNBs) and/or Radio Network Controllers (RNCs) in an E-UTRAN, which communicate with a wireless communication device, known as user equipment (UE). In LTE networks, an E-UTRAN may include a plurality of eNBs and may communicate with a plurality of UEs. An evolved packet core (EPC) may communicatively couple the E-UTRAN to an external network, such as the Internet. LTE networks include radio access technologies (RATs) and core radio network architecture that can provide high data rate, low latency, packet optimization, and improved system capacity and coverage.

Release 10 (Rel. 10) of the 3GPP LTE specifications supports component carrier bandwidths up to 20 MHz. However, to meet the International Mobile Telecommunications Advanced (IMT-Advanced) requirements for very high data rates, the concept of carrier aggregation has been introduced to support bandwidths larger than 20 MHz. Currently, the carrier aggregation concept allows five component carriers of the same frame structure to be aggregated such that the total bandwidth available to a mobile terminal is the sum of the bandwidths of the cells. As used herein, a component carrier (CC) may be referred to as a cell.

### Summary

The invention is defined by the subject matter of the independent claims. Advantageous embodiments are subject to the dependent claims.

### Brief Description of the Drawings

FIG. 1A is a block diagram illustrating serving cell indexing according to the first embodiment.
FIG. 1B is a block diagram illustrating serving cell indexing according to the second embodiment.
FIG. 2A is a block diagram illustrating an example activation/deactivation medium access control (MAC) control elements (CE) according to one embodiment.
FIG. 2B is a block diagram illustrating an example further extended MAC CE according to one embodiment.
FIG. 3 is a block diagram illustrating a legacy MAC subheader and a new MAC subheader according to one embodiment.
FIG. 4 is a block diagram illustrating an example cell group specific activation/deactivation MAC CE according to one embodiment.
FIG. 5 is a block diagram illustrating a MAC CE subheader and MAC CE content according to one embodiment.
FIG. 6 is a block diagram illustrating an example extended power headroom report (PHR) MAC CE for a given cell group according to one embodiment.
FIG. 7 is a block diagram of an activation/deactivation MAC CE having a variable size according to certain embodiments.
FIG. 8 is a block diagram of example activation/deactivation MAC CE content according to one embodiment.
FIG. 9 is a block diagram of an example DCI format with a new bitmap field according to one embodiment.
FIG. 10 is a block diagram illustrating electronic device circuitry in accordance with various embodiments.
FIG. 11 is a flowchart of a method for carrier aggregation according to one embodiment.
FIG. 12 is a flowchart of a method for component carrier management according to one embodiment.
FIG. 13 is a block diagram illustrating, for one embodiment, example components of a user equipment (UE) device.

### Detailed Description of Embodiments

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the embodiments disclosed herein. However, it will be apparent to those skilled in the art having the benefit of the present disclosure that the various aspects of the embodiments disclosed herein may be practiced in other examples that depart from these specific details. In certain instances, descriptions of well-known devices, circuits, and methods are omitted so as not to obscure the disclosure with unnecessary detail.

### I. Overview

Various specific definitions found in the following description are provided to help general understanding of the present disclosure, and it is apparent to those skilled in the art that the present disclosure can be implemented without such definition.

The present disclosure includes several techniques for indexing a primary serving cell (called PCell) and up to 31 secondary serving cells (called SCells) in carrier aggregation (CA). Certain embodiments include a grouping concept to facilitate SCell operation, such as activation/deactivation and power headroom report (PHR) functions. In addition, or in other embodiments, several new medium access control (MAC) control elements (CEs) enable efficient activation/deactivation and PHR functions while balancing signaling overhead and a desired degree of flexibility.

Generally, a UE may be configured with a subset of the cells offered by the network. The number of aggregated cells configured for one UE can change dynamically through time based on, for example, UE traffic demand, type of service used by the UE, system load, etc. A cell that a UE is configured to use is referred to as a serving cell for that UE. A UE has one PCell, which also handles some signaling, and zero or more SCells. The term "serving cell" includes both the PCell and SCells.

Cells may be configured or de-configured using radio resource control (RRC) signaling, which can be slow. SCells are initially configured in a deactivated state (e.g., the UE cannot receive the SCells' physical downlink control channel (PDCCH) or physical downlink shared channel (PDSCH)). After an SCell is configured, the UE sends the PHR to the network. After configured SCells are activated, the UE can access the SCells' PDCCH, PDSCH, and/or physical uplink shared channel (PUSCH), and provide channel quality indicator (CQI) reporting for the SCells. SCells can be activated or deactivated using a MAC CE, which is much faster than RRC signaling. Thus, an activation/deactivation process can quickly adjust the number of activated cells to match the number that are required to fulfill data rates used at any given time. Activation therefore provides the possibility to keep multiple cells configured for activation on an as-needed basis.

Previous CA work included basic CA feature support aimed at aggregation of up to five carriers of the same frame structure. With the tremendous growth of LTE-capable devices, many LTE deployments are becoming capacity limited due to interference and the volume of data delivered. Deployment of LTE using unlicensed spectrum in combination with LTE using licensed spectrum to cope with the explosive increase in mobile data consumption may be referred to as license assisted access (LAA). WLANs operating in the 5 gigahertz (GHz) band may already support 80 megahertz (MHz) in the field and 160 MHz is to follow in future deployments of IEEE 802.11ac. To enable the utilization of at least similar bandwidth with LAA as IEEE 802.11ac, CA capability up to 32 CCs may be pursued.

To reconfigure, add, and remove SCells using RRC signaling, the information elements (IEs) SCelllndex and ServCelllndex are used to identify SCells and serving cells (e.g., the PCell) and SCells) for the procedure of addition/modification/release and activation/deactivation of SCell(s). The SCelllndex (value ranges from 1 to 7) includes a short identity and is used to identify an SCell. The ServCelllndex (value ranges from 0 to 7 where value 0 applies to the PCell) includes a short identity and is used to identify a serving cell (e.g., the PCell or an SCell). In addition, ServCelllndex is used as 3-bit carrier indicator field (CIF) in downlink control information (DCI) formats if the UE is configured with cross-carrier scheduling.

The SCelllndex and ServCelllndex IEs of prior systems can only indicate up to seven SCells and up to eight serving cells. However, for CA with up to 32 CCs, these serving cell indexing values are insufficient.

Thus, embodiments disclosed herein include methods to address serving cell indexing, activation/deactivation function, and PHR function support for up to 31 SCells. Certain such embodiments provide a fair tradeoff between MAC control signaling overhead and sufficient flexibility at the network (NW) side.

### II. Serving Cell Indexing

Two embodiments are provided for serving cell indexing for CA using up to 32 CCs. In a first embodiment, the range of the SCelllndex and ServCelllndex IEs are extended. In a second embodiment, cell group indexing is used.

### II(1). Extended Range SCelllndex and ServCelllndex

In the first embodiment for serving cell indexing, when each SCell is added, it is assigned with two unique identifications (IDs) for a given UE, including an SCell cell index SCelllndex and a serving cell index ServCelllndex ranging from 1 to 31. One example abstract syntax notation one (ASN.1) IE is provided as follows:

| | |
|---|---|
| SCellindex-r13 ::= | INTEGER (1..31) |
| ServCelllndex-r13 ::= | INTEGER (0..31) |

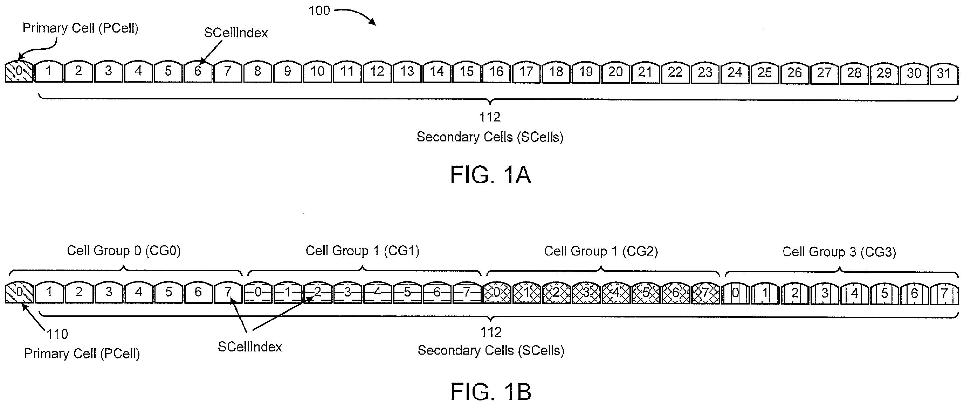

FIG. 1A is a block diagram illustrating serving cell indexing according to the first embodiment. FIG. 1A graphically represents 32 serving cells 100 (i.e., CCs) labeled 0-31. A first serving cell 110 is configured as the PCell and is assigned ServCelllndex = 0. The remaining 31 serving cells are configured as SCells 112 and are assigned SCelllndex values from 1-31.

### II(2). Cell Group Indexing

In the second embodiment for serving cell indexing, the configured CCs are divided into several cell groups (CGs). Each cell group includes at least one serving cell. In one embodiment, RRC signaling is used to map each serving cell to a CG and each CG size is controlled by RRC. Although the SCelllndex and ServCelllndex IEs are still provided to the UE for each configured SCell, the second embodiment differs from the first embodiment for cell indexing in various aspects. For example, the SCelllndex and ServCelllndex IEs in the second embodiment for serving cell indexing are indexed locally within the associated CG, representing the cell index within a CG. As another example, one more ID, named CG ID, is additionally provided by RRC for each SCell in order to give it a unique ID to facilitate CC management operations (e.g., activation/ deactivation, extended PHR (ePHR) reporting, etc.).

FIG. 1B is a block diagram illustrating serving cell indexing according to the second embodiment. In the example shown in FIG. 1B, the network has equally divided 32 CCs into four CGs, with each CG comprising eight CCs. Each SCell 112 in FIG. 1B is identified by an SCelllndex within a CG and a cell group index (CGi), which are shown as CG0, CG1, CG2, CG3. In the CG including the PCell 110 (e.g., CG0 in FIG. 1B), the existing value range of SCelllndex and ServCelllndex in legacy LTE systems may be used as in current LTE systems to identify an SCell 112. ServCelllndex value 0 applies for the PCell 110.

However, in cell groups that do not include the PCell 110 (e.g., CG1, CG2, and CG3 in FIG. 1B), the meaning and range of the SCelllndex and ServCelllndex IEs may be different. More specifically, the value of SCelllndex in these CGs is ranged from 0 to 7. In a CG that does not include the PCell 110, SCelllndex value = 0 and ServCelllndex value = 0 are used to uniquely identify an SCell 112 within the CG. Values from 1 to 7 are used to identify an SCell 112 in a CG, as in the current LTE system.

### III. MAC CEs for Activation/Deactivation and PHR

In the following sections, several embodiments are provided for activation/ deactivation and PHR mechanisms using new MAC CEs for CA using up to 31 SCells. In a first MAC CE embodiment, extended activation/deactivation and further extended PHR MAC CEs are provided. In a second embodiment, a cell group specific activation/deactivation is provided.

### III(1). Extended Activation/Deactivation and Further Extended PHR MAC CEs

In the first MAC CE embodiment, two new MAC CEs carrying a 32-bit bitmap field are provided for CA using up to 32 CCs. More specifically, this embodiment is described assuming the first embodiment described above with respect to FIG. 1A for serving cell indexing by RRC. The new MAC CEs may be referred to herein as "extended activation/deactivation" and "further extended power headroom report," respectively.

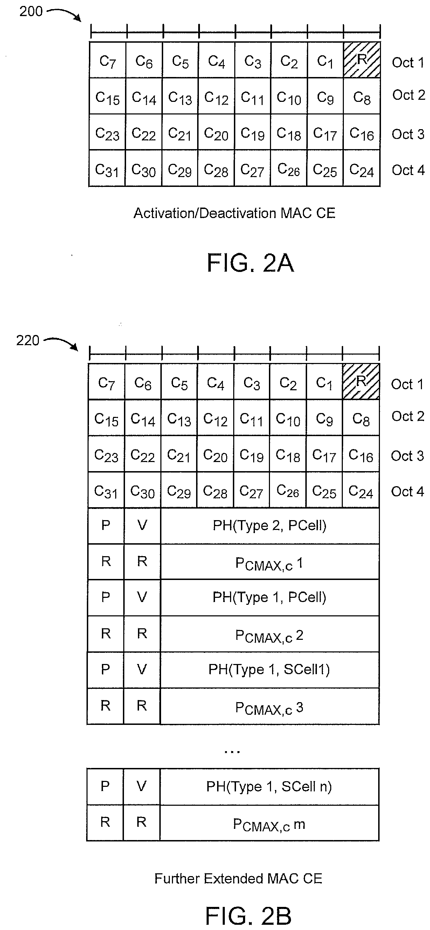

FIG. 2A is a block diagram illustrating an example activation/deactivation MAC CE 200 according to one embodiment. The extended activation/deactivation MAC CE 200 is received by the UE, has a fixed size, and includes four octets shown as Oct 1, Oct 2, Oct 3, and Oct 4. As each octet comprises eight bits, the extended activation/deactivation MAC CE 200 includes 31 C-fields and one R-field, which is defined as follows. For each Ci-field (e.g., C₁, C₂,..., C₃₁), if there is an SCell configured with SCelllndex "i" by RRC, the corresponding Ci field indicates the activation/deactivation status of the SCell with SCelllndex i; else the MAC entity ignores the Ci field. The Ci field, for example, may be set to "1" to indicate that the SCell with SCelllndex i is activated, and the Ci field may be set to "0" to indicate that the SCell with SCelllndex i is deactivated. The R-field is a reserved bit that is set to "0".

FIG. 2B is a block diagram illustrating an example further extended MAC CE 220 according to one embodiment. The further extended PHR MAC CE 220 is transmitted by the UE to the eNB and has a variable size. The meaning of each field in the further extended PHR MAC CE 220 may be maintained as that in the ePHR MAC CE. For example, the P-field indicates whether the UE applies power backoff due to power management, the V-field indicates whether the reported value of PH is based on a real transmission or a reference, PCMAX,c is the maximum output power of serving cell c, type 1 PH (for SCells) considers only PUSCH transmit power, and type 2 PH (for the PCell) considers both PUSCH and physical uplink control channel (PUCCH) transmit power. The Ci-field (e.g., C₁, C₂,..., C₃₁) indicates the presence of a power headroom (PH) field for the SCell with SCelllndex "i". The Ci-field may be set to "1" to indicate that a PH field for the SCell with SCelllndex i is reported. The Ci-field may be set to "0" to indicate that a PH field for the SCell with SCelllndex i is not reported. The R-field is a reserved bit that is set to "0".

For compatibility with legacy systems, various embodiments are provided to identify the new activation/deactivation and PHR MAC CEs. The methods may include explicit or implicit identification of legacy or new MAC CEs, identification using an "R" bit in a MAC CE subheader, or identification using a MAC protocol data unit (PDU) subheader with new logical channel identifier (LCID) values.

### III(1)(A). Explicit or Implicit Identification of MAC CEs

One embodiment includes reusing the current MAC CEs subheader including LCID value. For example, LCID 11001 may be used for the activation/deactivation MAC CE and LCID 11001 may be used for further extended PHR MAC CE. For a given UE, which MAC CE format is used either be explicitly configured by RRC or implicitly associated with the number of configured CCs. For example, if the configured CC number is larger than eight or any Cell ID is larger than seven, new MAC CEs are used; otherwise, legacy MAC CEs may are applied.

### III(1)(B). Identification Using "R" Bit in MAC CE Subheader

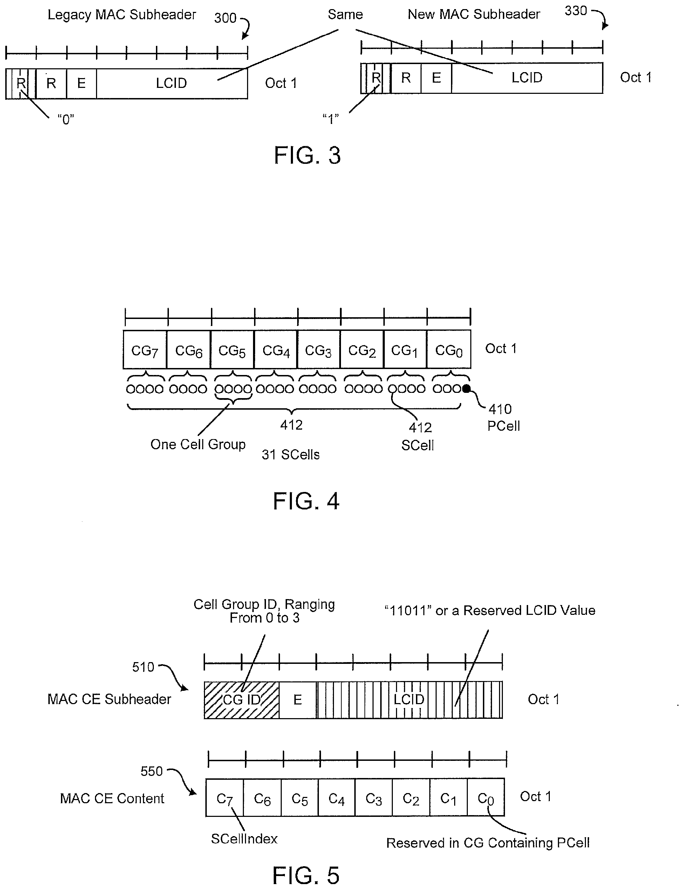

In another embodiment, new MAC CEs are identified with "R" bits in the MAC CE subheader. For example, FIG. 3 is a block diagram illustrating a legacy MAC subheader 300 and a new MAC subheader 330 according to one embodiment. As shown, one of the "R" bits is set to "0" to indicate use of a legacy MAC CE or to "1" to indicate a new MAC CE.

### III(1)(C). Identification Using New LCID Values

In another embodiment, two new MAC CEs are identified by MAC PDU subheaders with new LCIDs. In some embodiments, values of LCID "11001" and "10111" can be used for these two new MAC CEs, as shown in Table 1 (downlink shared channel (DL-SCH)) and Table 2 (uplink shared channel (UL-SCH)) below.

**Table 1 Values of LCID for DL-SCH**

| Index | LCID values |
|---|---|
| 00000 | CCCH |
| 00001-01010 | Identity of the logical channel |
| 01011-11000 | Reserved |
| 11001 | Extended Activation/Deactivation |
| 11010 | Long DRX Command |
| 11011 | Activation/Deactivation |
| 11100 | UE Contention Resolution Identity |
| 11101 | Timing Advance Command |
| 11110 | DRX Command |
| 11111 | Padding |

**Table 2 Values of LCID for UL-SCH**

| Index | LCID values |
|---|---|
| 00000 | CCCH |
| 00001-01010 | Identity of the logical channel |
| 01011 | CCCH |
| 01100-10110 | Reserved |
| 10111 | Further Extended Power Headroom Report |
| 11001 | Dual Connectivity Power Headroom Report |
| 11010 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

Potential benefits of the two latter embodiments (identification using the R bit or new LCIDs) include allowing an eNB to choose between legacy MAC CEs and new MAC CEs based on downlink (DL) traffic status of a given UE at least for activation/ deactivation purposes. Thus, unnecessary MAC overhead can be avoided if only a small portion of the CCs needs to be activated.

The first embodiment that explicitly or implicitly identifies MAC CEs and includes reusing the current MAC CEs subheader including LCID value may be advantageously readily implemented in system using current MAC CEs. One potential drawback is the increased MAC overhead, especially when only a small portion of configured CCs are frequently activated by using these larger MAC CEs. Further embodiments address this issue, intending to keep the same degree of flexibility in SCell activation/deactivation, while at the same time minimizing the signaling overhead in a dynamic manner.

### III(2). Cell Group Specific Activation/Deactivation MAC CE

The second MAC CE embodiment uses cell group specific activation/ deactivation. In one embodiment, each SCell within a CG is activated or deactivated together. In another embodiment, the SCells within a CG are independently activated and deactivated.

### II(2)(A). Group Activation/Deactivation

In one embodiment, the configured set of serving cells for a UE is grouped into multiple CGs. The grouping may be achieved by assigning a CG index for each serving cell through RRC signaling. For example, the serving cell indexing embodiment discussed above with respect to FIG. 1B provides one way to assigning CCs into CGs. In certain such embodiments, a maximum number of allowed CGs is limited to eight so that the current activation/deactivation MAC CE format can be directly reused to perform SCells activation/deactivation per CG. The total configured CCs may be divided into eight CGs each with a unique CG ID. Then, 8-bit C-field in current activation/deactivation MAC CE can be reused to one-to-one indicate the activation/ deactivation status of SCells in eight CGs.

For example, FIG. 4 is a block diagram illustrating an example cell group specific activation/deactivation MAC CE according to one embodiment. In this example, each bit in the octet represents a CG (shown as CG0, CG1, CG2, CG3, CG4, CG5, CG6, and CG7) comprising four serving cells. CG0 includes a PCell 410 and three SCells 412. Each of the other cell groups (CG1, CG2, CG3, CG4, CG5, CG6, and CG7) includes four SCells 412, for a total of 31 SCells. For any CGi: if there is a CG configured with CG index "i", the field indicates the activation/deactivation status of the all the SCells 412 within the CG; else, the MAC entity ignores the CGi field. In this example, the CGi field may be set to "1" to indicate that all the SCells 412 within a CG i are activated, and the Ci field may be set to "0" to indicate that all the SCells within the CG i are deactivated.

As discussed above, the use of a new activation/deactivation MAC CE can be explicitly configured for a UE by RRC signaling, implicitly determined based on the total number of configured CCs, identified by a MAC PDU subheader with new LCID, or identified by a MAC subheader by setting the "R" bit to 1.

A disadvantage of the embodiment shown in FIG. 4 may be less flexibility in terms of serving cell activation/deactivation due to the design restriction of applying one operation to all of the CCs within a CG. The following embodiment may address this issue at the cost of additional effort.

### III(2)(B). Independent Activation/Deactivation within a Group

In another embodiment, the SCells within a CG are independently activated and deactivated. As with the embodiment discussed above, this embodiment also groups of cells into multiple CGs. More specifically, different design options may have different limitations on the maximum number of CCs within a CG. Thus, the corresponding maximum number of CCs within a CG is described as follows. In general, the CG ID value used to identify a CG from multiple CGs may be encoded as part of MAC CE, either the MAC CE subheader or MAC CE content. Unlike the embodiment discussed above with respect to FIG. 4, one new MAC CE can be used to independently activate/deactivate CCs within a CG.

### III(2)(B)(i). Fixed Size MAC CE

In one example embodiment that provides CA with up to 32 CCs, up to four CGs may be used with each CG including up to eight CCs. Each CG is assigned a unique CG ID (e.g., ranging from 0 to 3). One SCelllndex ranging from 0 to 7 can be assigned to an SCell when it is added into a CG, which is locally indexed within the CG. The CG comprising the PCell has the CG ID 0.

FIG. 5 is a block diagram illustrating a MAC CE subheader 510 and MAC CE content 550 according to one embodiment. The MAC CE subheader 510 may be fixed-sized and may include the three header fields: a CG ID field; an extension (E) field indicating whether another field follows the subheader; and an LCID field. The CG ID field is provided by using the two reserved "R" fields to indicate the CG index. Thus, in this example, the length of the CG ID field is two bits.

The new activation/deactivation MAC CE can be identified by a MAC PDU subheader with new LCID, according to one embodiment, as specified in Table 1. In another embodiment, the new activation/deactivation MAC CE can be configured by RRC or implicitly determined based on the total number of configured CCs.

As shown in FIG. 5, the new activation/deactivation MAC CE content 550 in certain embodiments has a fixed size and includes a single octet comprising eight C-fields. For a Ci: if there is an SCell configured with SCelllndex "i" within the indicated CG, the field indicates the activation/deactivation status of the SCell with SCelllndex i; else the MAC entity ignores the Ci field. By way of example, the Ci field may be set to "1" to indicate that the SCell with SCelllndex i is activated, and the Ci field may be set to "0" to indicate that the SCell with SCelllndex i is deactivated.

For the PHR MAC CE, similar to the new activation/deactivation MAC CE design, the CG ID may be encoded in the new subheader to allow per CG and per CC extended PHR reporting through one MAC CE. Also, according to one embodiment, the new extended PHR CE can be identified by a MAC PDU subheader with the new LCID, as specified in Table 2. In another embodiment, the new extended PHR CE can be configured by RRC or implicitly determined based on total number of configured CCs.

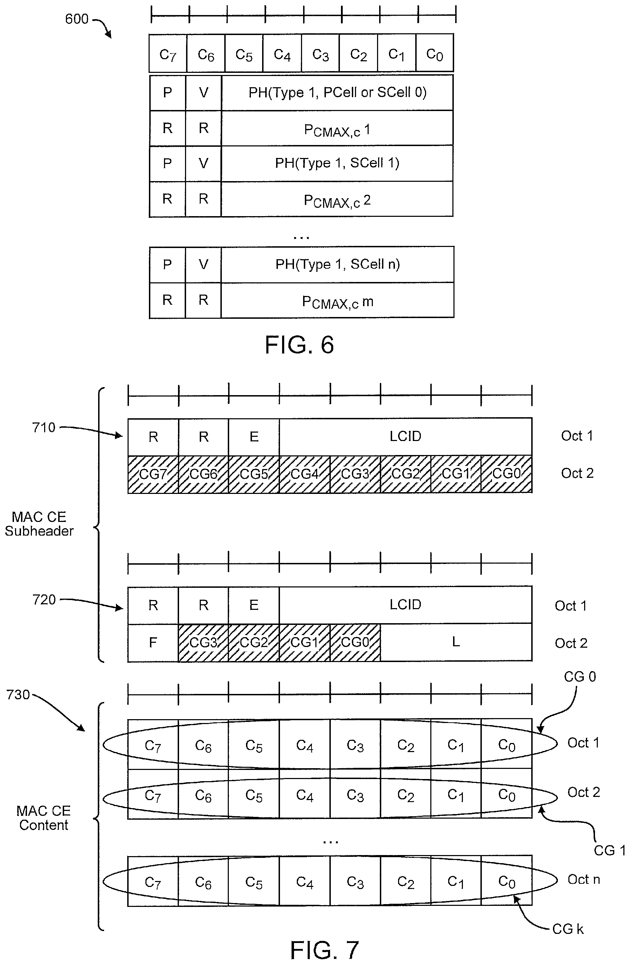

FIG. 6 is a block diagram illustrating an example extended PHR MAC CE 600 for a given CG according to one embodiment. The extended PHR MAC CE 600 has a variable size, and certain fields including V, PH, P, PCMAX,c remain the same as in LTE Rel-12 specification. However, the Ci field indicates the presence of a PH field for the SCell with SCelllndex "i" within the CG indicated through MAC CE. By way of example, the Ci field may be set to "1" to indicate that a PH field for the SCell with SCelllndex i is reported, and the Ci field may be set to "0" to indicate that a PH field for the SCell with SCelllndex i is not reported.

When the CG includes the PCell, then the PH field is present for PCell and the CO bit is reserved. In addition, as in legacy PHR MAC CE, the type 2 PHR may be present and associated with PCell depending on whether or not simultaneous PUCCH/PUSCH is configured for the given UE. If the CG only includes SCell, then the CO-field is used to indicate the presence of a PH field for the SCell 0 within the CG.

Using this approach, a MAC PDU is allowed to include one or more activation/deactivation MAC CEs or one or more than one ePHR MAC CEs in order to timely activate, for example, more than eight CCs or to report ePHRs for all activated CCs distributed in multiple CGs.

### III(2)(B)(ii). Variable Size MAC CE

In another embodiment, a new activation/deactivation MAC CE has a variable size to activate up to 32 CCs using a single MAC CE, thereby minimizing MAC overhead. FIG. 7 is a block diagram of an activation/deactivation MAC CE having a variable size according to certain embodiments. In particular, FIG. 7 shows two alternate MAC CE subheader fields: a first example MAC CE subheader 710 according to one embodiment; and a second example MAC CE subheader 720 according to another embodiment. The first example MAC CE subheader 710 includes legacy fields R/R/E/LCID and eight new CG-fields (shown as CG0, CG1, CG2, CG3, CG4, CG5, CG6, and CG7). The second example MAC CE subheader 720 includes two additional legacy fields: a length or L-field that indicates the length of the MAC PDU; and a format or F-field that defines a length of the L-field. The second example MAC CE subheader 720 also includes four new CG-fields (shown as CG0, CG1, CG2, and CG3).

The first example MAC CE subheader 710 and the second example MAC CE subheader 712 are, respectively, of fixed size. A CGi field indicates the presence of activation/deactivation fields for the SCells within CG "i". For example, the CGi field may be set to "1" to indicate that an 8-bit field for SCells within a CG i is present in the MAC CE content 730, and the CGi field may be set to "0" to indicate that an 8-bit field for SCells within the CG i is not present in MAC CE content 730.

In certain embodiments, the Ci-field in the MAC CE content 730 is the same as that of the MAC CE content 550 shown in FIG. 5. However, the size of the MAC CE content 730 is variable. In other words, the number of octets included in the MAC CE content 730 depends on the number of CGs defined (e.g., CG 0 corresponds to Oct 1, CG 1 corresponds to Oct 2, ..., and CG k corresponds to Oct n). The length of the MAC CE content 730 may be determined by the L-field or by CG fields (e.g., using the R bits) in the MAC CE subheader. The new MAC CE embodiments shown in FIG. 7 may be identified by a new LCID, explicitly configured by RRC, or implicitly determined based on total of configured CCs or setting one of "R" bits to "1".

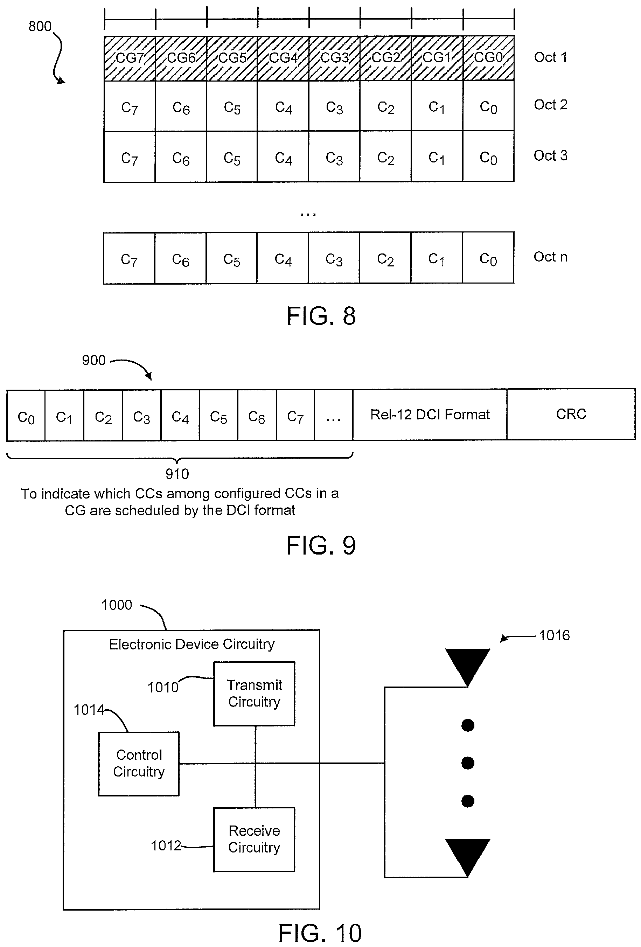

In another embodiment, the CGi-field can be moved from MAC CE subheader to the MAC CE content while keeping the same CGi-field meaning. The corresponding MAC CE subheader includes, for example, legacy R/R/E/LCID/F/L fields. FIG. 8 is a block diagram of example activation/deactivation MAC CE content 800 according to one embodiment. As shown, the example activation/deactivation MAC CE content 800 includes an octet (Oct 1) including CGi fields and a variable number of additional octets (Oct 2, Oct 3, ..., Oct n) including respective Ci fields.

In addition, or in other embodiments, an ePHR MAC CE may have a variable size. For example, the CGi-field in either the MAC CE subheader or the MAC CE contents may be used to indicate the presence of PH fields for the SCells within its CG. Then, the following Ci-field associated with CGi set as "1" is used to indicate the presence of a PH field for the SCell with SCelllndex i.

In addition, in some embodiments that provide activation/deactivation within a group, a new DCI format allows a single DCI format to arbitrarily schedule physical downlink shared channel (PDSCH) on a set of CCs within a given CG. For example, a new bitmap field can be added to each Rel-12 DCI format where the bitmap size equals the number of CCs in a given CG configured by RRC. To further reduce the signaling overhead, in certain embodiments, the bitmap field size equals the number of activated CCs in a given CG.

In addition, or in other embodiments, the new DCI format may be limited to be transmitted on one of the serving cells within a CG. This restriction can also be selectively removed at the cost of increasing a new field in DCI format to encode the unique CG ID.

### IV. Example DCI Format Design

FIG. 9 is a block diagram of an example DCI format 900 with a new bitmap field 910 according to one embodiment. In this example, the new bitmap field 910 is in Rel-12 LTE DCI formats to indicate which CCs of the configured CCs in a given CG are scheduled by a single DCI format. By way of example, assuming the association between a Ci field in DCI format and the corresponding serving cells in a CG is signaled by RRC, the Ci field may be set to "1" to indicate that the associated serving cell is scheduled by the DCI format, and the Ci field may be set to "0" to indicate that the associated serving cell is not scheduled by the DCI format.

For example, in some embodiments, if the network configures eight CCs for a CG0 indexing from CCO to CC7 and wants to schedule PDSCH transmissions on six CCs including <CC1, CC2, CC3, CC4, CC5, CC7>, the corresponding bitmap field setting in the DCI format may be set as "01111101". As shown in FIG. 9, a cyclic redundancy check (CRC) may be provided for the example DCI format 900 with the new bitmap field 910.

### V. Example Electronic Device Circuitry and Methods

FIG. 10 is a block diagram illustrating electronic device circuitry 1000 that may be eNB circuitry, UE circuitry, network node circuitry, or some other type of circuitry in accordance with various embodiments. In embodiments, the electronic device circuitry 1000 may be, or may be incorporated into or otherwise a part of, an eNB, a UE, a network node, or some other type of electronic device. In embodiments, the electronic device circuitry 1000 may include radio transmit circuitry 1010 and receive circuitry 1012 coupled to control circuitry 1014. In embodiments, the transmit circuitry 1010 and/or receive circuitry 1012 may be elements or modules of transceiver circuitry, as shown. The electronic device circuitry 1010 may be coupled with one or more plurality of antenna elements 1016 of one or more antennas. The electronic device circuitry 1000 and/or the components of the electronic device circuitry 1000 may be configured to perform operations similar to those described elsewhere in this disclosure.

In embodiments where the electronic device circuitry 1000 is or is incorporated into or otherwise part of a UE, the receive circuitry 1012 may be to receive, a MAC PDU, wherein the MAC PDU includes an activation/deactivation MAC subheader and an activation/deactivation MAC CE, and wherein the MAC PDU identifies a plurality of carriers configured into at least one CG and having a CG ID. The control circuitry 1014 may perform activation/deactivation operations in accordance with the MAC PDU.

In embodiments wherein the electronic device 1000 is an eNB or is part of or otherwise incorporated into an eNB, the transmit circuitry 1010 may be to transmit, to a UE, a MAC PDU, wherein the MAC PDU includes an activation/deactivation MAC subheader and an activation/deactivation MAC CE, and wherein the MAC PDU identifies a plurality of carriers configured into at least one CG and having a CG ID.

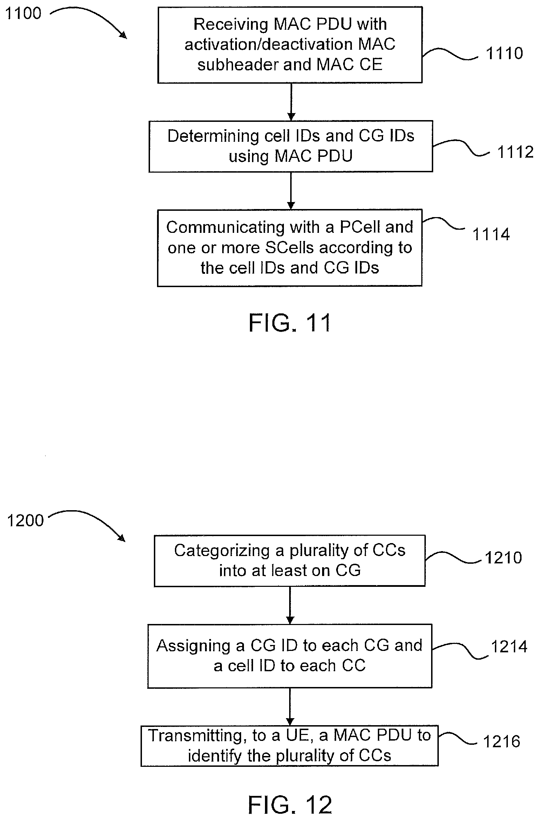

In certain embodiments, the electronic device circuitry 1000 shown in FIG. 10 is operable to perform one or more methods, such as the methods shown in FIG. 11. FIG. 11 is a flowchart of a method 1100 for carrier aggregation according to one embodiment. The method 1100 may be performed by a UE, and includes receiving 1110, from an eNB, a MAC PDU. The MAC PDU comprises an activation/deactivation MAC subheader and an activation/deactivation MAC CE. The method 1100 may further include determining 1112, from at least one of the activation/deactivation MAC subheader and the activation/deactivation MAC CE: a cell identity (ID) for each of a plurality of configured carriers categorized into at least one cell group (CG); and a CG ID assigned to each of the at least one CG. The method 1100 may further include communicating 1114 with the wireless communication system through a primary cell (PCell) corresponding to a first identified cell ID and a secondary cell (SCell) corresponding to a second identified cell ID.

In certain embodiments, the electronic device circuitry 1000 shown in FIG. 10 is operable to perform one or more methods, such as the method 1200 shown in FIG. 12. FIG. 12 is a flowchart of a method 1200 for component carrier management according to one embodiment. The method 1200 may be performed by one or more network nodes, such as an eNB. The method 1200 may include: categorizing 1210 a plurality of configured carriers (CCs) into at least one cell group (CG) according to a predefined rule; assigning 1214 a CG identity (ID) to each CG and a cell ID to each configured carrier; and transmitting 1216, to a user equipment (UE) in a wireless communication system, a medium access control (MAC) protocol data unit (PDU) to identify the plurality of configured carriers categorized into the at least one CG, the MAC PDU comprising an activation/deactivation MAC subheader and an activation/deactivation MAC control element (CE).

### Vi. Example UE Components

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

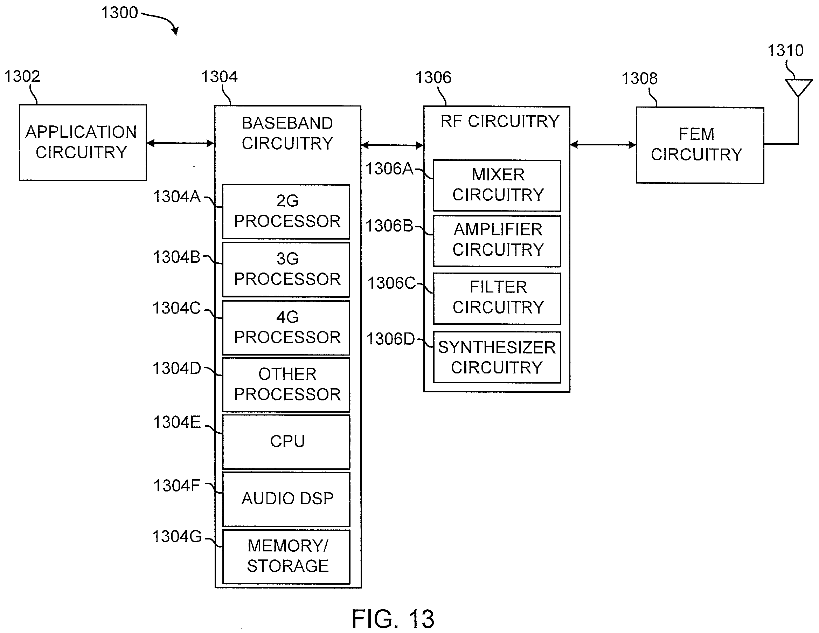

Embodiments described herein may be implemented into a system using any suitably configured hardware and/or software. FIG. 13 is a block diagram illustrating, for one embodiment, example components of a user equipment (UE) device 1300. In some embodiments, the UE device 1300 may include application circuitry 1302, baseband circuitry 1304, Radio Frequency (RF) circuitry 1306, front-end module (FEM) circuitry 1308, and one or more antennas 1310, coupled together at least as shown in FIG. 13.

The application circuitry 1302 may include one or more application processors. By way of non-limiting example, the application circuitry 1302 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 1304 may include one or more single-core or multi-core processors. The baseband circuitry 1304 may include one or more baseband processors and/or control logic. The baseband circuitry 1304 may be configured to process baseband signals received from a receive signal path of the RF circuitry 1306. The baseband 1304 may also be configured to generate baseband signals for a transmit signal path of the RF circuitry 1306. The baseband processing circuitry 1304 may interface with the application circuitry 1302 for generation and processing of the baseband signals, and for controlling operations of the RF circuitry 1306.

By way of non-limiting example, the baseband circuitry 1304 may include at least one of a second generation (2G) baseband processor 1304A, a third generation (3G) baseband processor 1304B, a fourth generation (4G) baseband processor 1304C, other baseband processor(s) 1304D for other existing generations, and generations in development or to be developed in the future (e.g., fifth generation (5G), 6G, etc.). The baseband circuitry 1304 (e.g., at least one of baseband processors 1304A-1304D) may handle various radio control functions that enable communication with one or more radio networks via the RF circuitry 1306. By way of non-limiting example, the radio control functions may include signal modulation/demodulation, encoding/decoding, radio frequency shifting, other functions, and combinations thereof. In some embodiments, modulation/demodulation circuitry of the baseband circuitry 1304 may be programmed to perform Fast-Fourier Transform (FFT), precoding, constellation mapping/demapping functions, other functions, and combinations thereof. In some embodiments, encoding/decoding circuitry of the baseband circuitry 1304 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 1304 may include elements of a protocol stack. By way of non-limiting example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1304E of the baseband circuitry 1304 may be programmed to run elements of the protocol stack for signaling of the PHY, MAC, RLC, PDCP and/or RRC layers. In some embodiments, the baseband circuitry 1304 may include one or more audio digital signal processor(s) (DSP) 1304F. The audio DSP(s) 1304F may include elements for compression/decompression and echo cancellation. The audio DSP(s) 1304F may also include other suitable processing elements.

The baseband circuitry 1304 may further include memory/storage 1304G. The memory/storage 1304G may include data and/or instructions for operations performed by the processors of the baseband circuitry 1304 stored thereon. In some embodiments, the memory/storage 1304G may include any combination of suitable volatile memory and/or non-volatile memory. The memory/storage 1304G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 1304G may be shared among the various processors or dedicated to particular processors.

Components of the baseband circuitry 1304 may be suitably combined in a single chip, a single chipset, or disposed on a same circuit board in some embodiments. In some embodiments, some or all of the constituent components of the baseband circuitry 1304 and the application circuitry 1302 may be implemented together, such as, for example, on a system on a chip (SOC).

In some embodiments, the baseband circuitry 1304 may provide for communication compatible with one or more radio technologies. For example, in some embodiments, the baseband circuitry 1304 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1304 is configured to support radio communications of more than one wireless protocol may be referred to as multi-mode baseband circuitry.

The RF circuitry 1306 may enable communication with wireless networks using modulated electromagnetic radiation through a non-solid medium. In various embodiments, the RF circuitry 1306 may include switches, filters, amplifiers, etc. to facilitate the communication with the wireless network. The RF circuitry 1306 may include a receive signal path which may include circuitry to down-convert RF signals received from the FEM circuitry 1308, and provide baseband signals to the baseband circuitry 1304. The RF circuitry 1306 may also include a transmit signal path which may include circuitry to up-convert baseband signals provided by the baseband circuitry 1304, and provide RF output signals to the FEM circuitry 1308 for transmission.

In some embodiments, the RF circuitry 1306 may include a receive signal path and a transmit signal path. The receive signal path of the RF circuitry 1306 may include mixer circuitry 1306A, amplifier circuitry 1306B, and filter circuitry 1306C. The transmit signal path of the RF circuitry 1306 may include filter circuitry 1306C and mixer circuitry 1306A. The RF circuitry 1306 may further include synthesizer circuitry 1306D configured to synthesize a frequency for use by the mixer circuitry 1306A of the receive signal path and the transmit signal path. In some embodiments, the mixer circuitry 1306A of the receive signal path may be configured to down-convert RF signals received from the FEM circuitry 1308 based on the synthesized frequency provided by synthesizer circuitry 1306D. The amplifier circuitry 1306B may be configured to amplify the down-converted signals.

The filter circuitry 1306C may include a low-pass filter (LPF) or band-pass filter (BPF) configured to remove unwanted signals from the down-converted signals to generate output baseband signals. Output baseband signals may be provided to the baseband circuitry 1304 for further processing. In some embodiments, the output baseband signals may include zero-frequency baseband signals, although this is not a requirement. In some embodiments, the mixer circuitry 1306A of the receive signal path may comprise passive mixers, although the scope of the embodiments is not limited in this respect.

In some embodiments, the mixer circuitry 1306A of the transmit signal path may be configured to up-convert input baseband signals based on the synthesized frequency provided by the synthesizer circuitry 1306D to generate RF output signals for the FEM circuitry 1308. The baseband signals may be provided by the baseband circuitry 1304 and may be filtered by filter circuitry 1306C. The filter circuitry 1306C may include a low-pass filter (LPF), although the scope of the embodiments is not limited in this respect.

In some embodiments, the mixer circuitry 1306A of the receive signal path and the mixer circuitry 1306A of the transmit signal path may include two or more mixers, and may be arranged for quadrature downconversion and/or upconversion, respectively. In some embodiments, the mixer circuitry 1306A of the receive signal path and the mixer circuitry 1306A of the transmit signal path may include two or more mixers and may be arranged for image rejection (e.g., Hartley image rejection). In some embodiments, the mixer circuitry 1306A of the receive signal path and the mixer circuitry 1306A may be arranged for direct downconversion and/or direct upconversion, respectively. In some embodiments, the mixer circuitry 1306A of the receive signal path and the mixer circuitry 1306A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In such embodiments, the RF circuitry 1306 may include analog-to-digital converter (ADC) and digital-to-analog converter (DAC) circuitry, and the baseband circuitry 1304 may include a digital baseband interface to communicate with the RF circuitry 1306.

In some dual-mode embodiments, separate radio IC circuitry may be provided for processing signals for each spectrum, although the scope of the embodiments is not limited in this respect.

In some embodiments, the synthesizer circuitry 1306D may include one or more of a fractional-N synthesizer and a fractional N/N+1 synthesizer, although the scope of the embodiments is not limited in this respect as other types of frequency synthesizers may be suitable. For example, synthesizer circuitry 1306D may include a delta-sigma synthesizer, a frequency multiplier, a synthesizer comprising a phase-locked loop with a frequency divider, other synthesizers and combinations thereof.

The synthesizer circuitry 1306D may be configured to synthesize an output frequency for use by the mixer circuitry 1306A of the RF circuitry 1306 based on a frequency input and a divider control input. In some embodiments, the synthesizer circuitry 1306D may be a fractional N/N+1 synthesizer.

In some embodiments, frequency input may be provided by a voltage controlled oscillator (VCO), although that is not a requirement. Divider control input may be provided by either the baseband circuitry 1304 or the applications processor 1302 depending on the desired output frequency. In some embodiments, a divider control input (e.g., N) may be determined from a look-up table based on a channel indicated by the applications processor 1302.

The synthesizer circuitry 1306D of the RF circuitry 1306 may include a divider, a delay-locked loop (DLL), a multiplexer and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In such embodiments, the delay elements may be configured to break a VCO period up into Nd equal packets of phase, where Nd is the number of delay elements in the delay line. In this way, the DLL may provide negative feedback to help ensure that the total delay through the delay line is one VCO cycle.

In some embodiments, the synthesizer circuitry 1306D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be a LO frequency (fLO). In some embodiments, the RF circuitry 1306 may include an IQ/polar converter.

The FEM circuitry 1308 may include a receive signal path which may include circuitry configured to operate on RF signals received from one or more antennas 1310, amplify the received signals, and provide the amplified versions of the received signals to the RF circuitry 1306 for further processing. The FEM circuitry 1308 may also include a transmit signal path which may include circuitry configured to amplify signals for transmission provided by the RF circuitry 1306 for transmission by at least one of the one or more antennas 1310.

In some embodiments, the FEM circuitry 1308 may include a TX/RX switch configured to switch between a transmit mode and a receive mode operation. The FEM circuitry 1308 may include a receive signal path and a transmit signal path. The receive signal path of the FEM circuitry 1308 may include a low-noise amplifier (LNA) to amplify received RF signals and provide the amplified received RF signals as an output (e.g., to the RF circuitry 1306). The transmit signal path of the FEM circuitry 1308 may include a power amplifier (PA) configured to amplify input RF signals (e.g., provided by RF circuitry 1306), and one or more filters configured to generate RF signals for subsequent transmission (e.g., by one or more of the one or more antennas 1310.

In some embodiments, the UE device 1300 may include additional elements such as, for example, memory/storage, a display, a camera, one of more sensors, an input/output (I/O) interface, other elements, and combinations thereof.

In some embodiments, the UE device 1300 may be configured to perform one or more processes, techniques, and/or methods as described herein, or portions thereof.

### Examples

The following examples pertain to further embodiments.
Example 1 is a method for a user equipment (UE) to operate in a wireless communication system. The method includes receiving, from an evolved universal terrestrial radio access network (E-UTRAN) Node B (eNB), a medium access control (MAC) protocol data unit (PDU). The MAC PDU includes an activation/deactivation MAC subheader and an activation/deactivation MAC control element (CE). The method also includes receiving, from a radio resource control (RRC) message, a cell identity (ID) for each of a plurality of configured carriers categorized into at least one cell group (CG), and/or a CG ID assigned to each of the at least one CG. The method further includes determining activation/deactivation of configured secondary cells (SCells) of the plurality of configured carriers according to at least a first or a second activation/deactivation MAC subheader and activation/deactivation MAC CE. The method may also include communicating with the wireless communication system through a primary cell (PCell) corresponding to a first identified cell ID and an activated SCell corresponding to a second identified cell ID.
Example 2 includes the method of Example 1, wherein up to eight configured carriers of the plurality of configured carriers is categorized into each of the at least one CG; and wherein the cell ID for each of the plurality of configured carriers is locally indexed within a corresponding CG.
Example 3 includes the method of any of Examples 1-2, wherein the first activation/deactivation MAC CE and MAC subheader are standard activation/deactivation MAC CE and MAC subheader used in 3rd Generation Partnership Project (3GPP) Release 12 long term evolution (LTE) system. The second activation/deactivation MAC CE is a new MAC CE with a same or a larger size than the first activation/deactivation MAC CE.
Example 4 includes the method of Example 3, wherein the second activation/deactivation MAC CE has a fixed size and includes four octets comprising 31 C-fields and one R-field. The method further includes determining from one or more of the 31 C-fields an activation/deactivation status of an associated SCell configured by radio resource control (RRC) according to its SCell ID or index value.
Example 5 includes the method of any of Examples 1-4, further comprising identifying the first and the second activation/deactivation MAC CEs by two different logical channel identities (LCIDs) included in the activation/deactivation MAC subheader.
Example 6 includes the method of Example 5, wherein the two different LCID for the first and the second activation/deactivation MAC CEs comprise a LCID "11011" used to identify the first activation/deactivation MAC CE, and a new LCID "11001" used to identify the second activation/deactivation MAC CE.
Example 7 includes the method of Example 6, wherein the first activation/deactivation MAC CE is used when no cell has a cell ID larger than seven, and the second activation/deactivation MAC CE is used when at least one cell has a cell ID larger than seven.
Example 8 includes the method of any of Examples 1-4, further comprising identifying the first and the second activation/deactivation MAC CEs based on a reserved "R" bit in the activation/deactivation MAC subheader.
Example 9 includes the method of Example 1, wherein the second activation/deactivation MAC CE has a fixed size and includes a single octet comprising eight CG-fields. The method further includes determining an activation/deactivation status of a plurality of SCells within a particular CG identified with a CG ID associated with one of the eight CG-fields.
Example 10 includes the method of Example 1, wherein the second activation/deactivation MAC subheader has a fixed sized and comprises a CG ID header field, an extension (E) header field, and a logical channel identity (LCID) header field, wherein the second activation/deactivation MAC CE has a fixed size and comprises a single octet including eight C-fields. The method further includes determining an activation/deactivation status of a single SCell within a CG indicated by the CG ID header field in the activation/deactivation MAC subheader associated with one of eight C-fields of the second activation/deactivation MAC CE.
Example 11 includes the method of Example 1, wherein the second activation/deactivation MAC subheader comprises a plurality of CG fields, and wherein the second activation/ deactivation MAC CE has a variable size with a length either indicated by a length "L" field or the plurality of CG fields in the second activation/deactivation MAC subheader. The method further includes determining a presence of a single octet activation/deactivation field in the second activation/deactivation MAC CE for SCells within a corresponding CG.
Example 12 includes the method of Example 11, wherein the second activation/deactivation MAC subheader comprises eight CG fields.
Example 13 includes the method of Example 11, wherein the second activation/deactivation MAC subheader comprises the length "L" and four CG fields.
Example 14 includes the method of Example 1, wherein the second activation/deactivation MAC CE comprises a first octet comprising CG fields and a variable number of second octets comprising C-fields, the variable number of second octets based on the CG fields in the first octet. The method further includes determining an activation/deactivation status of a plurality of SCells corresponding to the C-fields in a CG.
Example 15 includes the method of Example 1, further comprising generating an extended power headroom report (PHR) MAC CE with a variable size. The extended PHR MAC CE includes one or more octets comprising C-fields, and a variable number of octets comprising respective power headroom values for SCells indicated as active by the C-fields. The method may further include communicating the extended PHR MAC CE to the eNB.
Example 16 is an apparatus of a user equipment (UE) including logic, at least a portion of which comprises circuitry. The logic is to receive a first medium access control (MAC) protocol data unit (PDU) and a second MAC PDU. The first MAC PDU includes a first activation/deactivation MAC subheader and a first activation/deactivation MAC control element (CE). The second MAC PDU includes a second activation/deactivation MAC subheader and a second activation/deactivation MAC control element (CE). The second MAC PDU identifies a plurality of carriers configured into at least one cell group (CG) and having a CG identity (CG ID) and cell ID or cell index. The logic is also to perform activation/deactivation operations for secondary cells (SCells) in accordance with the MAC PDU.
Example 17 includes the apparatus of Example 16, wherein the logic is further configured to perform a method as recited in any of Examples 1-15.
Example 18 is an evolved universal terrestrial radio access network (E-UTRAN) Node B (eNB) that includes one or more processors, and at least one computer-readable storage medium having stored thereon instructions that, when executed by the one or more processors, cause the one or more processors to perform operations comprising: categorize a plurality of configured carriers into at least one cell group (CG) according to a predefined rule; assign a CG identity (ID) to each CG and a cell ID to each configured carrier; and transmit, to a user equipment (UE) in a wireless communication system, a first or a second medium access control (MAC) protocol data unit (PDU) based on maximum cell ID or cell index to activate or deactivate the plurality of configured carriers categorized into the at least one CG, the first and second MAC PDU comprising an activation/deactivation MAC subheader and an activation/deactivation MAC control element (CE).
Example 19 includes the eNB of Example 18, wherein the operations further categorize, through radio resource control (RRC), the cell ID for each of the plurality of configured carriers and the CG ID assigned to each of the at least one CG. Up to eight configured carriers of the plurality of configured carriers is categorized into each of the at least one CG. The cell ID for each of the plurality of configured carriers is locally indexed within a corresponding CG.
Example 20 includes the eNB of Example 18, wherein the operations further configure application of the first or second activation/deactivation MAC CE by radio resource control (RRC) signaling or using the second activation/deactivation MAC CE when the number of configured carriers exceeds eight.
Example 21 includes the eNB of Example 18, wherein the operations further identify the first and second activation/deactivation MAC CE by different logical channel identities (LCIDs) included activation/deactivation MAC subheader.
Example 22 includes the eNB of Example 18, wherein the operations further identify the first and second activation/deactivation MAC CEs based on the value of a reserved "R" bit in the activation/deactivation MAC subheader.
Example 23 includes the eNB of Example 18, wherein the second activation/deactivation MAC CE has a fixed size and includes four octets comprising 31 C-fields and one R-field, and wherein the operations further configure one or more of the 31 C-fields to indicate an activation/deactivation status of an associated SCell configured by radio resource control (RRC).
Example 24 includes the eNB of Example 18, wherein the second activation/deactivation MAC CE has a fixed size and includes a single octet comprising eight CG-fields, and wherein the operations further configure one or more of the eight CG-fields to indicate an activation/deactivation status of corresponding SCells within a particular CG identified with a CG ID.
Example 25 includes the eNB of Example 18, wherein the second activation/deactivation MAC subheader has a fixed sized and comprises a CG ID header field, an extension (E) header field, and a logical channel identity (LCID) header field, wherein the second activation/deactivation MAC CE has a fixed size and comprises a single octet including eight C-fields, and wherein the operations further configure an indication of an activation/deactivation status of a single SCell within a CG indicated by the CG ID header field in the second activation/deactivation MAC subheader.
Example 26 includes the eNB of Example 16, wherein the second activation/deactivation MAC subheader comprises a plurality of CG fields, and wherein the second activation/deactivation MAC CE has a variable size with a length either indicated by a length "L" field or the plurality of CG fields in the activation/deactivation MAC subheader, and wherein the operations further configure each of the plurality of CG fields to indicate a presence of a single octet activation/deactivation field for SCells within a corresponding CG.
Example 27 includes the eNB of Example 26, wherein the second activation/deactivation MAC subheader comprises eight CG fields.
Example 28 includes the eNB of Example 26, wherein the second activation/deactivation MAC subheader comprises the length "L" and four CG fields.
Example 29 is a user equipment (UE) that includes a transceiver and control circuitry. The transceiver includes receive circuitry and transmit circuitry to communicate with an evolved universal terrestrial radio access network (E-UTRAN) Node B (eNB). The receive circuitry is to: receive a medium access control (MAC) protocol data unit (PDU), the MAC PDU comprising an activation/deactivation MAC subheader and an activation/deactivation MAC control element (CE); and receive a radio resource control (RRC) message comprising one or more of: a cell identity (ID) for each of a plurality of configured carriers categorized into at least one cell group (CG); and a CG ID assigned to each of the at least one CG. The control circuitry is coupled to the transceiver and is to determine activation/deactivation of configured secondary cells (SCells) of the plurality of configured carriers according to at least a first or a second activation/deactivation MAC subheader and activation/deactivation MAC CE. The transceiver may also be to communicate with a wireless communication system through a primary cell (PCell) corresponding to a first identified cell ID and an activated SCell corresponding to a second identified cell ID.
Example 30 includes the UE of Example 29, wherein up to eight configured carriers of the plurality of configured carriers is categorized into each of the at least one CG; and wherein the cell ID for each of the plurality of configured carriers is locally indexed within a corresponding CG.
Example 31 includes the UE of Example 29, wherein: the first activation/deactivation MAC CE and MAC subheader are standard activation/deactivation MAC CE and MAC subheader used in 3rd Generation Partnership Project (3GPP) Release 12 long term evolution (LTE) system; and the second activation/deactivation MAC CE is a new MAC CE with a same or a larger size than the first activation/deactivation MAC CE.
Example 32 includes the UE of Example 31, wherein the second activation/deactivation MAC CE has a fixed size and includes four octets comprising 31 C-fields and one R-field, and wherein the control circuitry comprises one or more processors to determine from one or more of the 31 C-fields an activation/deactivation status of an associated SCell configured by radio resource control (RRC) according to its SCell ID or index value.
Example 33 includes the UE of Example 29, wherein the control circuitry comprises one or more processors to identify the first and the second activation/deactivation MAC CEs by two different logical channel identity (LCID) included in the activation/deactivation MAC subheader.
Example 34 includes the UE of Example 33, wherein the two different LCID for the first and the second activation/deactivation MAC CEs comprise: a first LCID "11011" used to identify the first activation/deactivation MAC CE; and a second LCID "11001" used to identify the second activation/deactivation MAC CE.
Example 35 includes the UE of Example 34, wherein: the first activation/deactivation MAC CE is used when no cell has a cell ID larger than seven; and the second activation/deactivation MAC CE is used when at least one cell has a cell ID larger than seven.
Example 36 includes the UE of Example 29, wherein the control circuitry comprises one or more processors to identify the first and the second activation/deactivation MAC CEs based on a reserved "R" bit in the activation/deactivation MAC subheader.
Example 37 includes the UE of Example 29, wherein the second activation/deactivation MAC CE has a fixed size and includes a single octet comprising eight CG-fields, and wherein the control circuitry comprises one or more processors to determine an activation/deactivation status of a plurality of SCells within a particular CG identified with a CG ID associated with one of the eight CG-fields.
Example 38 includes the UE of Example 29, wherein the second activation/deactivation MAC subheader has a fixed sized and comprises a CG ID header field, an extension (E) header field, and a logical channel identity (LCID) header field, wherein the second activation/deactivation MAC CE has a fixed size and comprises a single octet including eight C-fields, and wherein the control circuitry comprises one or more processors to determine an activation/deactivation status of a single SCell within a CG indicated by the CG ID header field in the activation/deactivation MAC subheader associated with one of eight C-fields of the second activation/deactivation MAC CE.
Example 39 includes the UE of Example 29, wherein the second activation/deactivation MAC subheader comprises a plurality of CG fields, wherein the second activation/ deactivation MAC CE has a variable size with a length either indicated by a length "L" field or the plurality of CG fields in the second activation/deactivation MAC subheader, and wherein the control circuitry comprises one or more processors to determine a presence of a single octet activation/deactivation field in the second activation/deactivation MAC CE for SCells within a corresponding CG.
Example 40 includes the UE of Example 39, wherein the second activation/deactivation MAC subheader comprises eight CG fields.
Example 41 includes the UE of Example 39, wherein the second activation/deactivation MAC subheader comprises the length "L" and four CG fields. Example 42 includes the UE of Example 29, wherein the second activation/deactivation MAC CE comprises a first octet comprising CG fields and a variable number of second octets comprising C-fields, the variable number of second octets based on the CG fields in the first octet, and wherein the control circuitry comprises one or more processors to determine an activation/deactivation status of a plurality of SCells corresponding to the C-fields in a CG.
Example 43 includes the UE of Example 29, wherein the control circuitry comprises one or more processors to generate an extended power headroom report (PHR) MAC CE with a variable size, the extended PHR MAC CE including: one or more octets comprising C-fields; and a variable number of octets comprising respective power headroom values for SCells indicated as active by the C-fields; and communicate the extended PHR MAC CE to the eNB.
Example 44 is a method for a user equipment (UE), comprising: receiving a first medium access control (MAC) protocol data unit (PDU) and a second MAC PDU, wherein the first MAC PDU includes a first activation/deactivation MAC subheader and a first activation/deactivation MAC control element (CE), and the second MAC PDU includes a second activation/deactivation MAC subheader and a second activation/deactivation MAC control element (CE), and wherein the second MAC PDU identifies a plurality of carriers configured into at least one cell group (CG) and having a CG identity (CG ID) and cell ID or cell index; and performing activation/deactivation operations for secondary cells (SCells) in accordance with the MAC PDU.
Example 45 includes the method for an evolved universal terrestrial radio access network (E-UTRAN) Node B (eNB), the method comprising: categorizing a plurality of configured carriers into at least one cell group (CG) according to a predefined rule; assigning a CG identity (ID) to each CG and a cell ID to each configured carrier; and transmitting, to a user equipment (UE) in a wireless communication system, a first or a second medium access control (MAC) protocol data unit (PDU) based on maximum cell ID or cell index to activate or deactivate the plurality of configured carriers categorized into the at least one CG, the first and second MAC PDU comprising an activation/deactivation MAC subheader and an activation/deactivation MAC control element (CE).
Example 46 includes the method of Example 45, further comprising: categorizing, through radio resource control (RRC), the cell ID for each of the plurality of configured carriers and the CG ID assigned to each of the at least one CG; wherein up to eight configured carriers of the plurality of configured carriers is categorized into each of the at least one CG; and wherein the cell ID for each of the plurality of configured carriers is locally indexed within a corresponding CG.
Example 47 includes the method of Example 45, further comprising configuring application of the first or second activation/deactivation MAC CE by radio resource control (RRC) signaling or using the second activation/deactivation MAC CE when the number of configured carriers exceeds eight.
Example 48 includes the method of Example 45, further comprising identifying the first and second activation/deactivation MAC CE by different logical channel identities (LCIDs) included activation/deactivation MAC subheader.
Example 49 includes the method of Example 45, further comprising identifying the first and second activation/deactivation MAC CEs based on the value of a reserved "R" bit in the activation/deactivation MAC subheader.
Example 50 includes the method of Example 45, wherein the second activation/deactivation MAC CE has a fixed size and includes four octets comprising 31 C-fields and one R-field, the method further comprising configuring one or more of the 31 C-fields to indicate an activation/deactivation status of an associated SCell configured by radio resource control (RRC).
Example 51 includes the method of Example 45, wherein the second activation/deactivation MAC CE has a fixed size and includes a single octet comprising eight CG-fields, the method further comprising configuring one or more of the eight CG-fields to indicate an activation/deactivation status of corresponding SCells within a particular CG identified with a CG ID.
Example 52 includes the method of Example 45, wherein the second activation/deactivation MAC subheader has a fixed sized and comprises a CG ID header field, an extension (E) header field, and a logical channel identity (LCID) header field, wherein the second activation/deactivation MAC CE has a fixed size and comprises a single octet including eight C-fields, the method further comprising configuring an indication of an activation/deactivation status of a single SCell within a CG indicated by the CG ID header field in the second activation/deactivation MAC subheader.
Example 53 includes the method of Example 45, wherein the second activation/deactivation MAC subheader comprises a plurality of CG fields, and wherein the second activation/deactivation MAC CE has a variable size with a length either indicated by a length "L" field or the plurality of CG fields in the activation/deactivation MAC subheader, the method further comprising configuring each of the plurality of CG fields to indicate a presence of a single octet activation/deactivation field for SCells within a corresponding CG.
Example 54 includes the method of Example 53, wherein the second activation/deactivation MAC subheader comprises eight CG fields.
Example 55 includes the method of Example 53, wherein the second activation/deactivation MAC subheader comprises the length "L" and four CG fields.
Example 56 is a method, comprising: determining, through radio resource control (RRC) signaling, a first identity (ID) for each of a plurality of configured component carriers and/or a second ID assigned to each of a plurality of cell groups; locally indexing up to eight of the plurality of configured component carriers within each of the plurality of cell groups; and aggregating data received over the plurality of configured component carriers.
Example 57 includes the method of Example 56, further comprising: receiving a first medium access control (MAC) protocol data unit (PDU), wherein the first MAC PDU includes a first activation/deactivation MAC subheader and a first activation/deactivation MAC control element (CE), and wherein the first MAC PDU includes the first ID and the second ID; and determining activation/deactivation of configured secondary cells according to at least one of the activation/deactivation subheader and the activation/deactivation MAC CE.
Example 58 is an apparatus of a user equipment (UE), comprising: logic, at least a portion of which comprises circuitry, to: determine, through radio resource control (RRC) signaling, a first identity (ID) for each of a plurality of configured component carriers and/or a second ID assigned to each of a plurality of cell groups; locally index up to eight of the plurality of configured component carriers within each of the plurality of cell groups; and aggregate data received over the plurality of configured component carriers.
Example 59 includes the apparatus of Example 58, wherein the logic comprises: receive circuitry to receive a first medium access control (MAC) protocol data unit (PDU), wherein the first MAC PDU includes a first activation/deactivation MAC subheader and a first activation/deactivation MAC control element (CE), and wherein the first MAC PDU includes the first ID and the second ID; and processing circuitry to determine activation/deactivation of configured secondary cells according to at least one of the activation/deactivation subheader and the activation/deactivation MAC CE.
Example 60 is at least one computer-readable storage medium having stored thereon computer-readable instructions, when executed, to implement a method as recited in any of Examples 1-15 and 44-57.
Example 61 is an apparatus comprising means to perform a method as recited in any of Examples 1-15 and 44-57.

Some of the infrastructure that can be used with embodiments disclosed herein is already available, such as general-purpose computers, mobile phones, computer programming tools and techniques, digital storage media, and communications networks. A computing device may include a processor such as a microprocessor, microcontroller, logic circuitry, or the like. The computing device may include a computer-readable storage device such as non-volatile memory, static random access memory (RAM), dynamic RAM, read-only memory (ROM), disk, tape, magnetic, optical, flash memory, or other computer-readable storage medium.

Various aspects of certain embodiments may be implemented using hardware, software, firmware, or a combination thereof. A component or module may refer to, be part of, or include an application specific integrated circuit (ASIC), an electronic circuit, a processor (shared, dedicated, or group), and/or memory (shared, dedicated or group) that execute one or more software or firmware programs, a combinational logic circuit, and/or other suitable components that provide the described functionality. As used herein, a software module or component may include any type of computer instruction or computer executable code located within or on a non-transitory computer-readable storage medium. A software module or component may, for instance, comprise one or more physical or logical blocks of computer instructions, which may be organized as a routine, program, object, component, data structure, etc., which performs one or more tasks or implements particular abstract data types.

In certain embodiments, a particular software module or component may comprise disparate instructions stored in different locations of a computer-readable storage medium, which together implement the described functionality of the module or component. Indeed, a module or component may comprise a single instruction or many instructions, and may be distributed over several different code segments, among different programs, and across several computer-readable storage media. Some embodiments may be practiced in a distributed computing environment where tasks are performed by a remote processing device linked through a communications network.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the embodiments are not to be limited to the details given herein, but may be modified within the scope and equivalents of the appended claims.

Those having skill in the art will appreciate that many changes may be made to the details of the above-described embodiments without departing from the underlying principles of the invention. The scope of the present invention should, therefore, be determined only by the following claims.

## Claims

1. A power headroom report (PHR) medium access control (MAC) control element for transmission from a user equipment (UE) to an eNodeB (eNB), the PHR MAC control element comprising:
one or more first octets comprising C fields, the number of first octets corresponding to a number of serving cells (SCell) associated with the UE, each C field indicating a presence of power headroom (PH) per SCell; and
one or more second octets, each of the second octets comprising a PH value for an SCell corresponding to one of the C fields.

2. The PHR MAC control element according to claim 1, wherein the one or more first octets comprise four octets when there are eight or more SCells.

3. The PHR MAC control element of claim 1 or 2, wherein a first one of the one or more first octets comprise a single reserved bit.

4. The PHR MAC control element according to one of claims 1 to 3, wherein the one or more second octets are arranged with respect to one another based on index values of associated SCells.

5. The PHR MAC control element of one of claims 1 to 4, wherein the one or more second octets comprise an octet immediately following the one or more first octets, said octet comprising a Type 2 PH field for a primary cell (PCell) associated with the UE.

6. The PHR MAC control element of one of claims 1 to 5, wherein the PHR MAC control element has a variable size.

7. The PHR MAC control element of one of claims 1 to 6, wherein the PHR MAC control element is one of an extended PHR MAC control element or a dual connectivity PHR MAC control element.

8. An apparatus for use in a user equipment (UE), wherein the apparatus is configured to generate a power headroom report (PHR) medium access control (MAC) control element according to one of claims 1 to 7, and to transmit the PHR MAC control element to an eNodeB (eNB).

9. The apparatus according to claim 8, wherein the apparatus is further configured to identify the PHR MAC control element in a subheader with a logical channel identifier.

10. An apparatus for use in an eNodeB (eNB), wherein the apparatus is configured to receive a power headroom report (PHR) medium access control (MAC) control element according to one of claims 1 to 7 from a user equipment (UE), and to process the PHR MAC control element.

11. The apparatus according to claim 10, wherein the apparatus is further configured to identify the PHR MAC control element in a subheader with a logical channel identifier.

12. A computer readable medium storing instructions that, when executed on an apparatus for use in a user equipment (UE), cause the apparatus to generate a power headroom report (PHR) medium access control (MAC) control element according to one of claims 1 to 7, and to transmit the PHR MAC control element to an eNodeB (eNB).

13. The computer readable medium according to claim 12, further storing instructions that, when executed on the apparatus, cause the apparatus to identify the PHR MAC control element in a subheader with a logical channel identifier.

14. A computer readable medium storing instructions that, when executed on an apparatus for use in an eNodeB (eNB), cause the apparatus to receive a power headroom report (PHR) medium access control (MAC) control element according to one of claims 1 to 7 from a user equipment (UE), and to process the PHR MAC control element.

15. The computer readable medium according to claim 14, further storing instructions that, when executed on the apparatus, cause the apparatus to identify the PHR MAC control element in a subheader with a logical channel identifier.
